# FASCICULE DE BREVET EUROPEEN

(11) **EP 2 912 111 B1**
(45) Date de publication et mention de la délivrance du brevet: **13.03.2019**
(21) Numéro de dépôt: 13783913.0
(22) Date de dépôt: 29.10.2013
(51) Int. Cl.: C08K 5/53, C08K 13/02, C08L 7/00, C08L 9/00, C08L 19/00

(54) **UTILISATION D'UNE SILICE PRECIPITEE CONTENANT DU TITANE ET D'UN AGENT DE COUPLAGE SPECIFIQUE DANS UNE COMPOSITION D'ELASTOMERE(S)**
VERWENDUNG EINES TITAN-ENTHALTENDEN GEFÄLLTEN SILIKAS UND EINES SPEZIELLEN HAFTVERMITTLERS IN EINER ELASTOMERENZUSAMMENSETZUNG
USE OF A TITANIUM-CONTAINING PRECIPITATED SILICA AND OF A SPECIFIC COUPLING AGENT IN AN ELASTOMER COMPOSITION

(30) Priorité: 29.10.2012 FR 1202901
(43) Date de publication de la demande: 02.09.2015
(73) Titulaire: Rhodia Operations, 75009 Paris (FR)
(72) Inventeur: GUY, Laurent, F-69250 Rillieux La Pape (FR); DUPUIS, Dominique, F-60800 Crepy En Valois (FR); ALLAIN, Emmanuelle, F-94240 L'Hay Les Roses (FR)
(86) Numéro de dépôt international: PCT/EP2013/072592
(87) Numéro de publication internationale: WO 2014/067936

(56) Documents cités:
- WO-A1-2004/016630
- WO-A1-2011/050533
- WO-A1-2011/050537
- WO-A1-2012/009852
- WO-A1-2012/146198
- US-A- 4 386 185
- US-B2- 7 070 749

## Description

La présente invention concerne l'utilisation conjointe, dans des compositions d'élastomère(s), de préférence comprenant un élastomère isoprénique, tel que du caoutchouc naturel, d'une charge inorganique particulière et d'un agent de couplage charge inorganique - élastomère particulier.

Elle concerne notamment l'utilisation de composés diènes conjugués spécifiques, tels que des composés diènes conjugués de phosphonate ou de phosphinate, dans des compositions d'élastomère(s) comprenant à titre de charge inorganique renforçante une silice précipitée contenant du titane.

L'invention est également relative aux compositions d'élastomère(s) correspondantes et aux articles, notamment des pneumatiques, comprenant de telles compositions.

Il est connu que les articles en élastomère(s) sont généralement soumis à des contraintes variées, par exemple telles qu'une variation de température, une variation de sollicitation de fréquence importante en régime dynamique, une contrainte statique importante et/ou une fatigue en flexion non négligeable en régime dynamique. De tels articles sont par exemple des pneumatiques, des semelles de chaussures, des revêtements de sols, des bandes de convoyeur, des courroies de transmission de puissance, des tuyaux flexibles, des joints, notamment des joints d'appareils électroménagers, des supports jouant le rôle d'extracteurs de vibrations de moteurs soit avec des armatures métalliques, soit avec un fluide hydraulique à l'intérieur de l'élastomère, des gaines de câbles, des câbles, des galets de téléphériques.

Il a été alors proposé d'utiliser notamment des compositions d'élastomère(s) renforcées par des charges inorganiques spécifiques qualifiées de « renforçantes », présentant de préférence une haute dispersibilité. Ces charges, en particulier les charges blanches comme les silices précipitées, sont capables de rivaliser avec ou même de dépasser au moins du point de vue renforçant le noir de carbone employé conventionnellement, et offrent en outre à ces compositions une hystérèse généralement plus basse, synonyme notamment d'une diminution de l'échauffement interne des articles en élastomère(s) lors de leur utilisation.

Il est connu de l'homme du métier qu'il est généralement nécessaire d'employer dans les compositions d'élastomère(s) contenant de telles charges renforçantes un agent de couplage charge inorganique - élastomère, encore appelé agent de liaison, qui a pour fonction notamment d'assurer une connexion suffisante, de nature chimique et/ou physique, entre la surface des particules de charge inorganique (par exemple une silice précipitée) et l'(les) élastomère(s), tout en facilitant en même temps la dispersion de cette charge inorganique au sein de la matrice élastomérique.

Un tel agent de couplage, au moins bifonctionnel, a par exemple comme formule générale simplifiée « N-V-M », dans laquelle :
- N représente un groupe fonctionnel (fonction "N") capable de se lier physiquement et/ou chimiquement à la charge inorganique, une telle liaison pouvant être établie, par exemple, entre un atome de silicium de l'agent de couplage et les groupes hydroxyles (OH) de la surface de la charge inorganique (par exemple les silanols de surface lorsqu'il s'agit de silice) ;
- M représente un groupe fonctionnel (fonction "M") capable de se lier physiquement et/ou chimiquement à l'élastomère, notamment par l'intermédiaire d'un atome ou d'un groupe d'atomes appropriés (par exemple un atome de soufre) ;
- V représente un groupe (divalent/hydrocarboné) permettant de relier "N" et "M".

Les agents de couplage ne doivent pas être confondus avec de simples agents de recouvrement de charge inorganique qui, de manière connue, peuvent comporter la fonction "N" active vis-à-vis de la charge inorganique mais sont dépourvus de la fonction "M" active vis-à-vis de l'élastomère.

Des agents de couplage, notamment (silice - élastomère), ont été décrits dans de nombreux documents de l'état de la technique, les plus connus étant des silanes (poly)sulfurés, en particulier des alkoxysilanes (poly)sulfurés. Parmi ces silanes (poly)sulfurés, on peut citer notamment le tétrasulfure de bis-triéthoxysilylpropyle (en abrégé TESPT), qui est généralement encore considéré aujourd'hui comme un produit apportant, pour des vulcanisats comprenant une charge inorganique à titre de charge renforçante, telle que de la silice, un très bon, voire le meilleur, compromis en terme de sécurité au grillage, de facilité de mise en oeuvre et de pouvoir renforçant.

L'utilisation combinée de silice précipitée, en particulier hautement dispersible, et d'un silane (ou composé organosilique fonctionnalisé) polysulfuré dans une composition d'élastomère(s) modifié(s) a permis le développement du « pneu vert » pour les véhicules tourisme (véhicules légers). Cette combinaison a permis d'atteindre une performance de résistance à l'usure comparable à celle des mélanges d'élastomères renforcés par du noir de carbone, tout en améliorant de manière significative la résistance au roulement (d'où une baisse de la consommation de carburant), et l'adhérence sur sol humide (réduisant ainsi la distance de freinage sur routes humides).

Il serait donc intéressant de pouvoir utiliser également une charge inorganique comme de la silice dans les pneumatiques pour véhicules poids lourds (tels que les camions), pneumatiques qui sont obtenus à partir de compositions à base d'élastomère(s) isoprénique(s), principalement le caoutchouc naturel.

Cependant, la même combinaison silice / silane polysulfuré appliquée à un élastomère isoprénique comme le caoutchouc naturel n'a pas permis d'obtenir un niveau de renforcement (qui peut être illustré par une courbe contrainte -allongement en traction uniaxiale) suffisant par rapport au niveau obtenu lorsque l'on emploie du noir de carbone comme charge, ce renforcement en retrait conduisant à une médiocre résistance à l'usure.

Un but de la présente invention est notamment de proposer une association, pour les compositions d'élastomère(s) comprenant un élastomère, de préférence un élastomère isoprénique, tel que le caoutchouc naturel, d'un agent de couplage particulier avec une charge inorganique particulière (avantageusement renforçante). Cette combinaison est une alternative à l'utilisation d'agents de couplage connus avec des charges inorganiques renforçantes connues, et confère de plus auxdites compositions d'élastomère(s) un compromis de propriétés très satisfaisant, notamment au niveau de leurs propriétés rhéologiques, mécaniques et/ou dynamiques, notamment hystérétiques. Généralement, cette combinaison permet une amélioration du compromis hystérèse / renforcement. En outre, les compositions d'élastomère(s) obtenues présentent préférentiellement une bonne adhésion à la fois à la charge inorganique et aux substrats auxquels elles sont ensuite appliquées.

Plus précisément, la présente invention fournit des compositions d'élastomère(s), de préférence à base d'un ou de plusieurs élastomères isopréniques, par exemple à base de caoutchouc naturel, qui sont particulièrement appropriées pour les pneumatiques pour véhicules poids lourds, tels que les camions. Ces compositions d'élastomère(s) comprennent une charge inorganique particulière et un composé spécifique qui agit en tant qu'agent de couplage entre la charge inorganique et le ou les élastomères.

Ainsi, l'invention concerne dans son premier objet l'utilisation, dans une composition d'élastomère(s) :
- d'une silice précipitée contenant entre 0,5 et 10% en poids de titane, comme charge inorganique (renforçante), avec
- un composé ayant la formule (I) suivante, ledit composé de formule (I) étant éventuellement, en totalité ou en partie, sous une forme polymérisée : 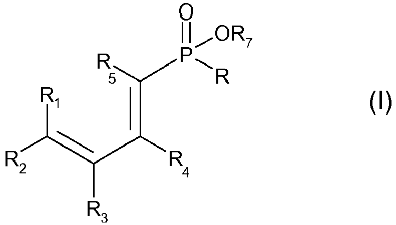 formule dans laquelle :
   * R représente R₆ ou OR₈,
   * R₁, R₂, R₃, R₄, R₅ et R₆ sont chacun choisis indépendamment parmi les groupes hydrogène (H), alkyle, aryle, alkaryle, aralkyle, cycloalkyle, hétérocycloalkyle et alcényle, et
   * R₇ et R₈ sont chacun choisis indépendamment parmi les groupes hydrogène (H), alkyle, aryle, alkaryle, aralkyle, cycloalkyle, alcényle, et les métaux choisis dans le groupe constitué par Na, Li et Ca.

En général, la composition d'élastomère(s) comprend au moins un élastomère isoprénique, de préférence du caoutchouc naturel.

Le composé de formule (I) ci-dessus, qui est éventuellement, en totalité ou en partie, sous une forme polymérisée, est généralement employé, entre autres, en tant qu'agent de couplage entre la charge inorganique (silice précipitée contenant du titane) et le(s)dit(s) élastomère(s) (généralement entre la charge inorganique et l'élastomère ou les élastomères isopréniques, et éventuellement entre la charge inorganique et d'autres élastomères présents dans la composition).

Selon un deuxième objet, l'invention concerne les compositions d'élastomère(s) utilisant l'association spécifique décrite ci-dessus, à savoir des compositions d'élastomère(s) comprenant :
- au moins un élastomère, de préférence un élastomère isoprénique, en particulier du caoutchouc naturel,
- au moins une charge inorganique,
- au moins un agent de couplage charge inorganique - élastomère,
caractérisée en ce que ladite charge inorganique est une silice précipitée contenant du titane et ledit agent de couplage est le composé de formule (I) ci-dessus, ce composé de formule (I) étant éventuellement, en totalité ou en partie, sous une forme polymérisée.

Le composé représenté par la formule (I) ci-dessus est un composé diène conjugué. Selon un mode de réalisation spécifique, un mélange de différents diènes conjugués correspondant à la formule (I) peut être utilisé. Un ou plusieurs composés de formule (I) peuvent éventuellement être utilisés ensemble avec un autre composé diène conjugué.

Le ou les composés de formule (I) peuvent être utilisés, en totalité ou en partie, sous une forme polymérisée. Dans le présent exposé, l'expression « composé de formule (I) sous une forme polymérisée » se rapporte à un polymère pouvant être obtenu par polymérisation de monomères comprenant au moins un monomère de formule (I) telle que définie ci-dessus. Ce polymère peut être un homopolymère ou un copolymère (polymère séquencé ou aléatoire par exemple).

Dans le cas spécifique d'un copolymère, il peut s'agir :
- d'un polymère pouvant être obtenu par polymérisation de composés de formule (I) de nature différente (par exemple sans autre monomère) ; ou
- d'un polymère pouvant être obtenu par polymérisation d'un ou de plusieurs composés de formule (I) avec d'autres monomères qui ne correspondent pas à la formule (I), lesdits autres monomères étant par exemple choisis parmi :
   - les composés diènes conjugués, tels que par exemple l'isoprène, le butadiène et/ou l'isobutylène ;
   - les composés insaturés, notamment les composés éthyléniquement, allyliquement et/ou vinyliquement insaturés, qui peuvent par exemple être un composé vinylique aromatique, un composé vinylique, un nitrile vinylique, un composé allylique, un ester allylique, un ester acrylique et/ou un ester méthacrylique.

Généralement, un composé de formule (I) qui est sous une forme polymérisée est un polymère ayant un indice de polymérisation faible (dit « oligomère »), par exemple un polymère d'un indice de polymérisation inférieur à 20, de manière préférée inférieur à 10. L'expression « indice de polymérisation » (ou « degré de polymérisation ») d'une population polymère donnée se rapporte ici au nombre moyen d'unités monomères contenues dans les polymères de la population considérée. Cet « indice de polymérisation » peut notamment être établi en utilisant la spectroscopie RMN ¹H.

Par exemple, un composé de formule (I) sous une forme polymérisée peut être :
- un homopolymère d'un monomère de formule (I), ledit homopolymère ayant de préférence un indice de polymérisation inférieur à 10, de manière encore plus préférée inférieur à 5 ; ou
- un copolymère formé par polymérisation d'un mélange constitué de monomères distincts correspondant chacun à la formule (I), ledit polymère ayant de préférence un indice de polymérisation inférieur à 10, de manière encore plus préférée inférieur à 5.

Les composés de formule (I) utilisés selon la présente invention peuvent être employés sous la forme :
- d'un composé de formule (I) unique ;
- d'un homopolymère d'un composé de formule (I) unique, éventuellement en mélange avec le même composé de formule (I) sous une forme non polymérisée ;
- d'un mélange de deux composés de formule (I) ou plus ;
- d'un mélange d'au moins un composé de formule (I) sous une forme non polymérisée avec au moins un composé de formule (I) sous une forme polymérisée, le ou les composés sous la forme polymérisée étant identiques ou non au ou aux composés présents sous la forme non polymérisée.

Selon un mode de réalisation spécifique de la présente invention, les composés utiles en tant qu'agent de couplage qui sont employés dans la présente invention sont, ou comprennent, au moins un composé de formule (I) sous une forme polymérisée qui est par exemple un polymère (oligomère) ayant la formule (II) suivante : 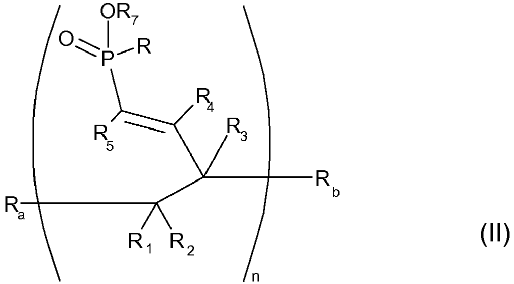 formule dans laquelle :
- R, R₁, R₂, R₃, R₄, R₅ et R₇ sont tels que définis précédemment ;
- n, qui est l'indice de polymérisation du polymère, est inférieur à 20, en particulier inférieur à 10, notamment compris entre 1,2 et 7, par exemple entre 1,5 et 6 ; et
- Rₐ et R_{b} sont des groupes terminaux, de préférence choisis parmi H et les groupes alkyle.

Dans le polymère de formule (II), n peut par exemple être compris entre 2 et 5, notamment entre 2,5 et 4,5, par exemple entre 3,8 et 4.

Les composés utiles en tant qu'agent de couplage qui sont employés selon l'invention peuvent contenir un seul polymère de formule (II) ou un mélange de différents polymères correspondant à la formule (II), éventuellement avec un ou plusieurs composés de formule (I) sous une forme non polymérisée.

Selon le présent exposé, les groupes alkyle et alcényle comprennent de préférence de 1 à 24 atomes de carbone, notamment de 1 à 18 atomes de carbone, par exemple de 1 à 10 atomes de carbone.

Les groupes aryle comprennent de préférence de 6 à 24 atomes de carbone, notamment de 6 à 18 atomes de carbone, par exemple de 6 à 10 atomes de carbone.

Les groupes alkaryle et aralkyle comprennent de préférence de 7 à 24 atomes de carbone, notamment de 7 à 18 atomes de carbone, par exemple de 7 à 10 atomes de carbone.

Les groupes cycloalkyle et hétérocycloalkyle comprennent de préférence de 3 à 24 atomes de carbone, notamment de 3 à 18 atomes de carbone.

Selon un mode de réalisation spécifique, deux radicaux parmi R₁, R₂, R₃, R₄, R₅, R₆ et R₇ peuvent former ensemble un groupe cycloalkyle ou hétérocycloalkyle, de préférence choisi parmi les cycles de 3 à 8 éléments.

Les composés de formule (I) ou (II) peuvent contenir un ou plusieurs centres chiraux et/ou une ou plusieurs doubles liaisons, et peuvent par conséquent exister sous la forme de stéréoisomères, tels que d'isomères Z et E ou cis et trans de structures cycliques ou de doubles liaisons (par exemple isomères géométriques), de rotamères, d'énantiomères ou de diastéréomères. Ainsi, lorsque la stéréochimie de centres chiraux n'est pas spécifiée, les structures chimiques représentées ici comprennent toutes les configurations possibles de ces centres chiraux, y compris la forme stéréoisomériquement pure (par exemple géométriquement pure, énantiomériquement pure ou diastéréomériquement pure) et les mélanges énantiomériques et stéréoisomériques, avec l'exception que lorsque seul un énantiomère est spécifié, la structure comprend également l'autre énantiomère. Par exemple, lorsqu'un composé de formule (I) décrit dans la présente invention est sous forme Z ou sous forme trans pour la double liaison proche de P, l'homme du métier doit comprendre que la forme E ou la forme cis du composé est également décrite. Les mélanges énantiomériques et stéréoisomériques peuvent être résolus en leurs composants énantiomères ou stéréoisomères en utilisant des techniques de séparation ou des techniques de synthèse chirale bien connues de l'homme du métier.

Selon un mode de réalisation de la présente invention, dans la formule (I) ou (II) telle que définie précédemment, R₁ représente H (groupe hydrogène).

Selon un mode de réalisation de la présente invention, dans la formule (I) ou (II) telle que définie précédemment, R₂ représente H. Selon un mode de réalisation spécifique, R₁ et R₂ représentent tous les deux H.

Selon un mode de réalisation de la présente invention, dans la formule (I) ou (II) telle que définie précédemment, R₄ représente H. Notamment dans ce cas, R₁ et/ou R₂ peuvent représenter H.

Selon un mode de réalisation de la présente invention, dans la formule (I) ou (II) telle que définie précédemment, R₁, R₂ et R₄ représentent H.

Dans la formule (I) ou (II) telle que définie précédemment, R₃ peut représenter un groupe alkyle, par exemple le groupe méthyle.

Dans la formule (I) ou (II) telle que définie précédemment, R₅ peut représenter un groupe alkyle, par exemple le groupe méthyle.

Selon un mode de réalisation particulier, dans la formule (I) ou (II), R₃ et R₅ représentent tous les deux le groupe méthyle.

Selon un mode de réalisation particulier, dans la formule (I) ou (II), R₁, R₂ et R₄ représentent l'atome d'hydrogène (H), et R₃ et R₅ représentent le groupe méthyle.

Selon une première variante de l'invention, R est un groupe R₆. Selon cette variante, R = R₆ représente de préférence H. Dans ce cas, qui est préféré selon l'invention, les composés de formule (I) ou (II) portent des groupes phosphinate.

Selon cette première variante, les composés utiles en tant qu'agent de couplage qui sont utilisés selon l'invention peuvent notamment comprendre des composés ayant la formule III, ce composé étant éventuellement, en totalité ou en partie, sous une forme polymérisée : 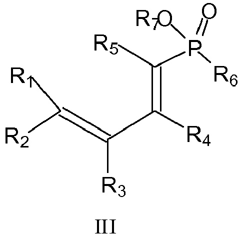 formule dans laquelle R₁, R₂, R₃, R₄, R₅ et R₆ représentent, indépendamment les uns des autres, un groupe hydrogène, alkyle, aryle, alkaryle, aralkyle, cycloalkyle, hétérocycloalkyle ou alcényle ; de préférence, ledit alkyle et ledit alcényle comprennent de 1 à 18 atomes de carbone, ledit aryle comprend de 6 à 18 atomes de carbone, ledit alkaryle et ledit aralkyle comprennent de 7 à 18 atomes de carbone, et ledit cycloalkyle et ledit hétérocycloalkyle comprennent de 3 à 18 atomes de carbone.

De préférence, R₁ et/ou R₂ représentent l'hydrogène (H).

De préférence, R₁, R₂ et R₄ représentent l'hydrogène ; ou R₃ et R₅ représentent le groupe méthyle ; de manière encore plus préférée, R₁, R₂ et R₄ représentent l'hydrogène, R₃ et R₅ représentent le groupe méthyle.

R₇ représente un groupe hydrogène, alkyle, aryle, alkaryle, aralkyle, cycloalkyle, alcényle, ou un métal choisi dans le groupe constitué par Na, Li, Ca ; de préférence, ledit alkyle et ledit alcényle comprennent de 1 à 18 atomes de carbone, ledit aryle comprend de 6 à 18 atomes de carbone, ledit alkaryle et ledit aralkyle comprennent de 7 à 18 atomes de carbone, et ledit cycloalkyle et ledit hétérocycloalkyle comprennent de 3 à 18 atomes de carbone.

Selon un mode de réalisation particulier, deux radicaux quelconques parmi R₁, R₂, R₃, R₄, R₅, R₆ et R₇ forment ensemble un groupe cycloalkyle ou hétérocycloalkyle, qui est de préférence choisi parmi les cycles de 3 à 8 éléments.

Un composé de phosphinate spécifique de formule (III) utile selon la présente invention est l'acide 4-méthyl-2,4-pentadiène-2-phosphinique (PiDM) ayant la formule suivante :

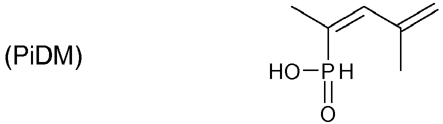

Les composés de formule (III) ci-dessus (par exemple PiDM) peuvent notamment être préparés à partir de cétones ou d'aldéhydes α,β- ou β,γ-insaturés, par exemple par un procédé comprenant :
la mise en réaction d'une cétone ou d'un aldéhyde α,β- ou β,γ-insaturé de formule (I-1) ou (II-1), 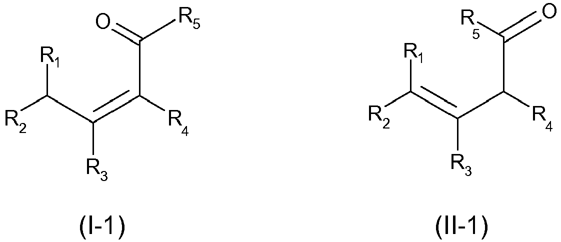 avec un acide phosphinique ou ses dérivés de formule 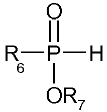 pour obtenir un composé de formule (III) telle que définie précédemment.

Le procédé ci-dessus permet de changer la sélectivité de la réaction de composés de phosphinate portant au moins une liaison P-H pour obtenir sélectivement des composés 1,3-diène en partant de composés de carbonyle α,β- ou β,γ-insaturés.

Sans vouloir être lié à une théorie existante quelconque, le procédé de préparation ci-dessus est valide en partant de composés de carbonyle α,β-insaturés ou de composés de carbonyle β,γ-insaturés, et les deux espèces conduisent à la formation du même diène.

Selon ce procédé, le composé (I-1) ou (II-1) est de préférence ajouté en un rapport molaire de 0,5:1 à 2:1 par rapport audit acide phosphinique ou ses dérivés; ou de préférence de 1:1 à 1,5:1 par rapport audit acide phosphinique ou ses dérivés. La réaction est généralement réalisée dans un solvant organique tel qu'un ou plusieurs solvants choisis dans le groupe constitué par le toluène, le cyclohexane et l'éther butylique. La durée de réaction est généralement de 4 à 24 heures, par exemple de 4 à 8 heures. La température de réaction est habituellement de 0 à 150 °C, de préférence de 85 à 125 °C.

La réaction est de préférence réalisée sous la protection d'un gaz inerte. Ledit gaz inerte peut être choisi par exemple parmi un ou plusieurs gaz du groupe constitué par l'azote, l'argon et le dioxyde de carbone.

Par exemple, l'oxyde mésitylique est mis en réaction avec de l'acide hypophosphoreux sous sa forme concentrée pour obtenir de l'acide 4-méthylpenta-2,4-diène-2-phosphinique. La même réaction peut être réalisée en utilisant de l'acide hypophosphoreux à 50 % et en utilisant du toluène en tant que solvant azéotropique pour éliminer l'eau pendant la réaction. Le monomère cible peut facilement être isolé et purifié par de simples extractions et lavages pour obtenir un produit pur jusqu'à 97 %.

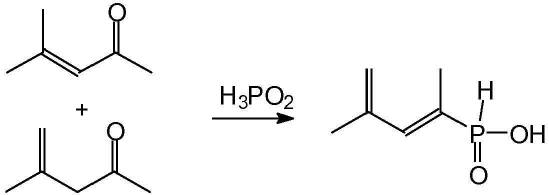

Le procédé décrit ci-dessus permet la formation d'un mélange de composés de phosphinate et de phosphonate qui peut être directement polymérisé pour obtenir des polymères contenant à la fois des groupes phosphinate et phosphonate dans lesquels les deux fonctionnalités sont bien connues pour fournir des propriétés utiles.

Les cétones et aldéhydes insaturés appropriés pour la présente invention peuvent être obtenus à partir de condensations aldoliques de cétones et d'aldéhyde.

Par exemple, on peut citer la dimérisation de méthylisobutylcétone (MIBK) telle qu'enseignée dans le brevet US4170609.

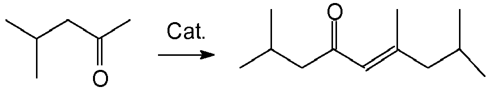

D'une manière semblable, la condensation aldolique de pinacolone fournit une cétone insaturée hautement ramifiée :

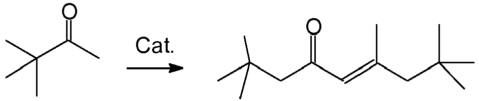

Des cétones et aldéhydes insaturés disponibles dans le commerce peuvent également être utilisés. Il s'agit de produits chimiques industriels importants utilisés en tant que solvants, par exemple l'oxyde mésitylique, précurseur d'autres produits de base et produits chimiques de spécialité, par exemple l'isophorone, et monomère pour matériaux polymères, par exemple la méthylvinylcétone (MVK).

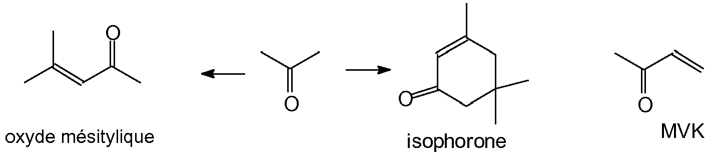

Le 3-méthylcrotonaldéhyde est un précurseur de vitamine A. Industriellement, il est produit à partir d'isobutène et de formaldéhyde :

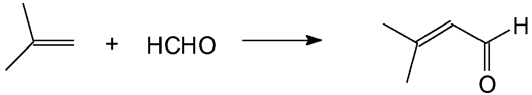

Un composé intéressant est le crotonaldéhyde. Il s'agit d'un composé biogénique, utilisé pour l'aromatisation. Il peut être produit à partir de ressources renouvelables, le bioéthanol :

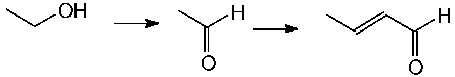

La 2-éthylacroléine et son isomère aldéhyde tiglique sont des intermédiaires pour agents aromatisants (brevet US4605779) :

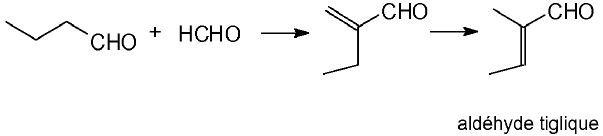

Des cétones et aldéhydes insaturés naturels peuvent également être utilisés dans la préparation, par exemple la pipéritone, la carvone, l'umbellulone, la menthène-2-one, la menthène-3-one, la verbénone et le myrténal.

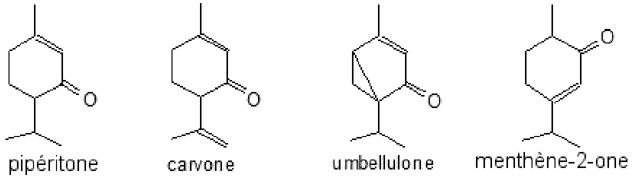

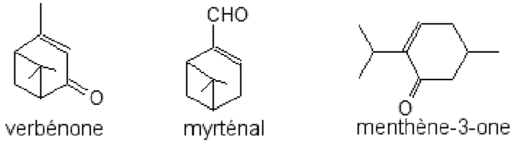

Selon une seconde variante de l'invention, R est un groupe OR₈. Selon cette variante, R₈ représente de préférence H. Par exemple, R₇ et R₈ représentent H. Selon un autre mode de réalisation, R₇ et R₈ peuvent former ensemble un groupe cycloalkyle ou hétérocycloalkyle, qui est de préférence choisi parmi les cycles à 5, 6, 7 et 8 éléments. Dans ce cas, les composés de formule (I) ou (II) portent des groupes phosphonate.

Selon cette seconde variante, les composés utiles en tant qu'agent de couplage qui sont utilisés selon l'invention peuvent notamment comprendre des composés de formule (I) telle que définie précédemment, en totalité ou en partie, sous une forme polymérisée, et dans laquelle :
▪ R₁, R₂, R₃, R₄ et R₅ représentent, indépendamment les uns des autres, un groupe hydrogène, alkyle, aryle, alkaryle, aralkyle, cycloalkyle, hétérocycloalkyle ou alcényle ; de préférence, ledit alkyle et ledit alcényle comprennent de 1 à 24 atomes de carbone, ledit aryle comprend de 6 à 24 atomes de carbone, ledit alkaryle et ledit aralkyle comprennent de 7 à 24 atomes de carbone, et ledit cycloalkyle et ledit hétérocycloalkyle comprennent de 3 à 24 atomes de carbone ; de manière encore plus préférée, ledit alkyle et ledit alcényle comprennent de 1 à 18 atomes de carbone, ledit aryle comprend de 6 à 18 atomes de carbone, ledit alkaryle et ledit aralkyle comprennent de 7 à 18 atomes de carbone, et ledit cycloalkyle et ledit hétérocycloalkyle comprennent de 3 à 18 atomes de carbone. De préférence, selon ce mode de réalisation, R₁ et/ou R₂ représentent l'hydrogène (H). R₁, R₂ et R₄ peuvent notamment représenter l'hydrogène ; ou, de préférence, R₃ et R₅ représentent le groupe méthyle. De manière encore plus préférée, R₁, R₂ et R₄ représentent l'hydrogène, et R₃ et R₅ représentent le groupe méthyle. Deux radicaux quelconques parmi R₁, R₂, R₃, R₄ et R₅ peuvent former ensemble un groupe cycloalkyle ou hétérocycloalkyle, qui est de préférence choisi parmi les cycles à 5, 6, 7 et 8 éléments.
▪ R représente OR₈, et R₇ et R₈ représentent, indépendamment l'un de l'autre, un groupe hydrogène (H), alkyle, aryle, alkaryle, aralkyle, cycloalkyle, alcényle, ou un métal choisi dans le groupe constitué par Na, Li et Ca ; de préférence, ledit alkyle et ledit alcényle comprennent de 1 à 24 atomes de carbone, ledit aryle comprend de 6 à 24 atomes de carbone, ledit alkaryle et ledit aralkyle comprennent de 7 à 24 atomes de carbone, et ledit cycloalkyle et ledit hétérocycloalkyle comprennent de 3 à 24 atomes de carbone ; de manière encore plus préférée, ledit alkyle et ledit alcényle comprennent de 1 à 18 atomes de carbone, ledit aryle comprend de 6 à 18 atomes de carbone, ledit alkaryle et ledit aralkyle comprennent de 7 à 18 atomes de carbone, et ledit cycloalkyle et ledit hétérocycloalkyle comprennent de 3 à 18 atomes de carbone. De préférence, selon ce mode de réalisation spécifique, R₇ et R₈ représentent l'hydrogène. Selon un autre mode de réalisation, R₇ et R₈ forment ensemble un groupe cycloalkyle ou hétérocycloalkyle, qui est de préférence choisi parmi les cycles à 5, 6, 7 et 8 éléments.

Un composé de phosphonate spécifique selon cette variante est l'acide 4-méthyl-2,4-pentadiène-2-phosphonique (PoDM), ayant la formule suivante :

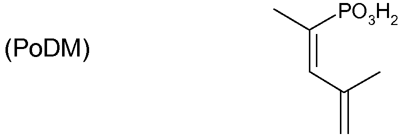

D'autres composés intéressants sont les homopolymères de PoDM, notamment ceux correspondant à la formule suivante : 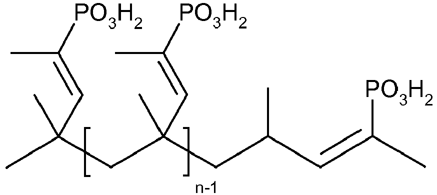 dans laquelle n est généralement inférieur à 19, de préférence inférieur à 9, en particulier compris entre 0,2 et 6, notamment entre 0,5 et 5 (par exemple entre 1 et 4, ou entre 1,5 et 3,5, voire égal à 2,9).

Les composés de phosphonate selon la seconde variante peuvent par exemple être préparés à partir de cétones ou d'aldéhydes α,β- ou β,γ-insaturés, par un procédé qui comprend la mise en réaction d'une cétone ou d'un aldéhyde α,β- ou β,γ-insaturé de formule (I-1) ou (II-1) telle que définie précédemment,
avec un acide phosphoreux ou ses dérivés ayant la structure

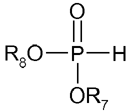

R₇ et R₈ étant tels que définis précédemment dans la formule (I).

Selon le procédé ci-dessus, le composé (I-1) ou (II-1) est de préférence ajouté en un rapport molaire de 1:1 à 1,5:1, de préférence de 1:1 à 1,2:1, par rapport audit acide phosphoreux ou ses dérivés. La durée de réaction est généralement de 4 à 24 heures, de préférence de 4 à 8 heures. La température de réaction est habituellement de 0 à 100 °C, de préférence de 20 à 60 °C.

La réaction ci-dessus peut éventuellement être réalisée sous la protection d'un gaz inerte. Ledit gaz inerte peut être choisi par exemple parmi un ou plusieurs gaz du groupe constitué par l'azote, l'argon et le dioxyde de carbone.

Sans vouloir être lié à une théorie existante quelconque, le procédé de préparation ci-dessus de la présente invention est valide en partant de composés de carbonyle α,β-insaturés ou de composés de carbonyle α,γ-insaturés, et les deux espèces conduisent à la formation du même diène. Les cétones et aldéhydes insaturés utilisés dans le procédé peuvent être obtenus à partir de condensations aldoliques de composés de carbonyle.

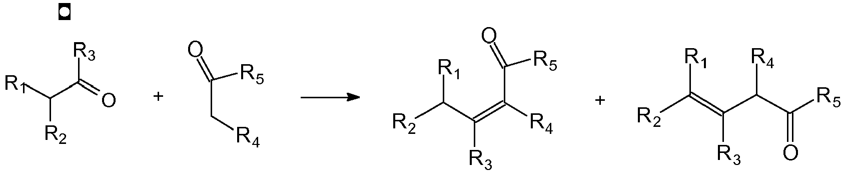

La charge inorganique qui est utilisée dans la présente invention est une silice précipitée contenant du titane.

La silice précipitée employée dans le cadre de l'invention possède une teneur en titane d'au moins 0,5 % en poids, de préférence d'au moins 0,75 % en poids, en particulier d'au moins 1,0 % en poids.

Cette teneur peut éventuellement être d'au moins 1,5 % en poids, en particulier d'au moins 2,0 % en poids, notamment d'au moins 2,5 % en poids, par exemple d'au moins 3,0 % en poids, voire d'au moins 3,5 % en poids.

La silice précipitée utilisée comme charge renforçante selon l'invention présente une teneur en titane d'au plus 10 % en poids, en particulier d'au plus 5 % en poids, notamment d'au plus 4,0 % en poids, par exemple d'au plus 3,7 % en poids.

La teneur en titane de la silice précipitée employée est comprise entre 0,5 et 10 % en poids, de préférence entre 0,5 et 5,0 % en poids, en particulier entre 0 ,75 et 5,0 % en poids, par exemple entre 1,0 et 4,0 % en poids. Cette teneur peut notamment être comprise entre 2,0 et 4,0 % en poids.

La teneur en titane peut être mesurée par tout procédé approprié, par exemple par ICP-OES (« Inductively Coupled Plasma - Optical Emission Spectroscopy »), par exemple à l'aide d'un appareil tel que l'Horiba Jobin Yvon Ultima, notamment après mise en solution avec de l'acide fluorhydrique.

Le principe de la méthode de mesure par ICP-OES est le suivant :
- on effectue une mise en solution de la silice avec de l'acide fluorhydrique : par exemple ajout de 4 mL d'acide fluorydrique concentré (40 % en masse) à 200 mg de silice précipitée, puis ajout dans 30 mL d'eau ultrapure ; puis on réalise deux dilutions, l'une au centième et l'autre au millième, dans de l'eau acidifiée avec de l'acide nitrique à 5 % ; cette étape dure 1 heure environ ;
- chaque solution obtenue ci-dessus est ensuite introduite dans le plasma de l'ICP-OES, qui apporte l'énergie pour exciter le titane ; les longueurs d'onde 323,452 nm, 323,904 nm, 336,121 nm et 338,376 nm correspondent aux raies d'émission du titane et leur intensité dépend de la teneur en titane ; au préalable, un étalonnage est réalisé (par exemple de 0,1 à 1 mg/L) à partir d'une solution étalon à 1 g/L ; cette étape dure 2 heures environ.

Le titane peut se trouver sous forme de TiO₂ à la surface de la silice.

Une partie du titane peut se trouver également inséré dans le réseau de la silice (en général avec des liaisons du type Ti-O-Si).

De manière préférée, la majorité du titane se trouve inséré dans le réseau de la silice. La totalité du titane peut se trouver insérée dans le réseau de la silice. L'absence de TiO₂ cristallisé à la surface de la silice peut alors être illustrée par DRX (Diffraction Rayons X).

Selon un mode de réalisation spécifique, la silice précipitée employée selon l'invention est hautement dispersible. Ainsi, elle a notamment une grande capacité de désintégration et de dispersion dans une matrice polymère, ce qui peut être observé par microscopie électronique ou microscopie optique, sur des tranches minces.

Généralement, la silice précipitée utilisée dans la présente invention a une surface spécifique CTAB comprise entre 70 et 300 m²/g.

Cette surface spécifique CTAB peut être comprise entre 70 et 100 m²/g, par exemple entre 75 et 95 m²/g.

Cependant, de manière très préférée, la surface spécifique CTAB de ladite silice précipitée est comprise entre 100 et 300 m²/g, en particulier entre 100 et 240 m²/g, notamment entre 130 et 230 m²/g par exemple entre 140 et 200 m²/g.

Généralement, la silice précipitée employée dans la présente invention a une surface spécifique BET comprise entre 70 et 300 m²/g.

Cette surface spécifique BET peut être comprise entre 70 et 100 m²/g, par exemple entre 75 et 95 m²/g.

Cependant, de manière très préférée, la surface spécifique BET de ladite silice précipitée est comprise entre 100 et 300 m²/g, en particulier entre 100 et 240 m²/g, notamment entre 130 et 230 m²/g, par exemple entre 140 et 200 m²/g.

La surface spécifique CTAB est la surface externe, pouvant être déterminée selon la norme NF ISO 5794-1 annexe G (juin 2010). La surface spécifique BET peut être déterminée selon la méthode de BRUNAUER - EMMET - TELLER décrite dans « The Journal of the American Chemical Society », Vol. 60, page 309, février 1938 et correspondant à la norme NF ISO 5794-1 annexe D (juin 2010).

La silice précipitée contenant du titane utilisée dans l'invention peut par exemple posséder :
- une surface spécifique CTAB de 140 à 170 m²/g et une surface spécifique BET de 140 à 180 m²/g, ou
- une surface spécifique CTAB de 70 à 140 m²/g, notamment de 70 à 100 m²/g, et une surface spécifique BET de 70 à 140 m²/g, notamment de 70 à 100 m²/g, ou
- une surface spécifique CTAB de 170 à 300 m²/g, notamment de 180 à 220 m²/g, et une surface spécifique BET de 180 à 300 m²/g, notamment de 185 à 230 m²/g.

La silice précipitée employée dans le cadre de l'invention peut présenter un rapport surface spécifique BET / surface spécifique CTAB supérieur à 1,1, en particulier supérieur à 1,2.

Un des paramètres de la silice précipitée contenant du titane mise en oeuvre dans l'invention peut résider dans la distribution, ou répartition, de son volume poreux, et notamment dans la distribution du volume poreux qui est généré par les pores de diamètres inférieurs ou égaux à 400 Å. Ce dernier volume correspond au volume poreux utile des charges employées dans le renforcement des élastomères.

Si cette silice précipitée peut posséder, selon une variante, une distribution de pores telle que le volume poreux généré par les pores dont le diamètre est compris entre 175 et 275 Å (V2) représente moins de 50 % du volume poreux généré par les pores de diamètres inférieurs ou égaux à 400 Å (V1), il peut être intéressant d'employer, selon une seconde variante, une silice précipitée possédant une distribution de pores telle que le volume poreux généré par les pores dont le diamètre est compris entre 175 et 275 Å (V2) représente au moins 50 %, par exemple au moins 55 %, du volume poreux généré par les pores de diamètres inférieurs ou égaux à 400 Å (V1),

Les volumes poreux et les diamètres de pores sont mesurés par porosimétrie au mercure (Hg), en utilisant un porosimètre MICROMERITICS Autopore 9520, et sont calculés par la relation de WASHBURN avec un angle de contact thêta égal à 130° et une tension de surface gamma égale à 484 Dynes/cm (norme DIN 66133).

L'aptitude à la dispersion et à la désagglomération des silices peut être quantifiée au moyen du test spécifique de désagglomération ci-dessous.

On effectue une mesure granulométrique (par diffraction laser), sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC HELIOS/BF (équipé d'une lentille optique de type R3 (0,9 - 175 µm)), en mettant en oeuvre la théorie de Fraunhofer.

On introduit 2 grammes (+/- 0,1 gramme) de silice dans un bécher de 50 ml (hauteur : 7,5 cm et diamètre : 4,5 cm) et l'on complète à 50 grammes par ajout de 48 grammes (+/- 0,1 gramme) d'eau permutée. On obtient ainsi une suspension aqueuse à 4 % de silice.

On procède ensuite à la désagglomération sous ultra-sons comme suit : on appuie sur le bouton « TIMER » du sonificateur et on ajuste le temps à 5 minutes et 30 secondes. On ajuste l'amplitude de la sonde (correspondant à la puissance nominale) à 80 %, puis la sonde à ultra-sons est plongée sur 5 centimètres dans la suspension de silice contenue dans le bécher. On allume alors la sonde à ultra-sons et la désagglomération est effectuée pendant 5 minutes et 30 secondes à 80 % d'amplitude de la sonde.

On réalise ensuite la mesure granulométrique en introduisant dans la cuve du granulomètre un volume V (exprimé en ml) de la suspension, ce volume V étant tel que l'on atteigne sur le granulomètre 8 % de densité optique.

Le diamètre médian ∅₅₀, après désagglomération aux ultra-sons, est tel que 50 % des particules en nombre ont une taille inférieure à ∅₅₀ et 50 % ont une taille supérieure à ∅₅₀. La valeur du diamètre médian ∅₅₀ que l'on obtient est d'autant plus faible que la silice présente une aptitude à la désagglomération élevée.

On peut également déterminer le rapport (10 x V / densité optique de la suspension détectée par le granulomètre), cette densité optique correspondant à la valeur réelle détectée par le granulomètre lors de l'introduction de la silice.

Ce rapport (facteur de désagglomération F_{D}) est indicatif du taux de particules de taille inférieure à 0,1 µm qui ne sont pas détectées par le granulomètre. Ce rapport est d'autant plus élevé que la silice présente une aptitude à la désagglomération élevée.

La silice précipitée utilisée selon l'invention peut présenter un diamètre ∅₅₀, après désagglomération aux ultra-sons, d'au plus 5,5 µm, de préférence inférieur à 4 µm.

Elle peut présenter un facteur de désagglomération aux ultra-sons F_{D} supérieur à 4,5 ml, en particulier supérieur à 5,5 ml.

Par ailleurs, le pH de la silice précipitée utilisée dans la présente invention est généralement compris entre 6,0 et 8,2, par exemple entre 6,2 et 8,0.

Le pH est mesuré selon la méthode suivante dérivant de la norme ISO 787/9 (pH d'une suspension à 5 % dans l'eau) :

### Appareillage :

- pHmètre étalonné (précision de lecture au 1/100^{e})
- électrode de verre combinée
- bécher de 200 mL
- éprouvette de 100 mL
- balance de précision à 0,01 g près.

### Mode opératoire :

5 grammes de silice sont pesés à 0,01 gramme près dans le bécher de 200 mL. 95 mL d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectuée.

L'état physique dans lequel se présente la silice précipitée employée selon l'invention peut être quelconque, c'est-à-dire qu'elle peut être sous la forme de billes sensiblement sphériques (microperles), de poudre ou de granulés.

Elle peut ainsi se présenter sous forme de billes sensiblement sphériques de taille moyenne d'au moins 80 µm, de préférence d'au moins 150 µm, en particulier comprise entre 150 et 270 µm ; cette taille moyenne peut être déterminée selon la norme NF X 11507 (décembre 1970) par tamisage à sec et détermination du diamètre correspondant à un refus cumulé de 50 %.

Elle peut également se présenter sous forme de poudre de taille moyenne d'au moins 3 µm, en particulier d'au moins 10 µm, de préférence d'au moins 15 µm ; cette taille est par exemple comprise entre 15 et 60 µm.

Elle peut se présenter sous forme de granulés (en général de forme sensiblement parallélépipédique) de taille d'au moins 1 mm, par exemple comprise entre 1 et 10 mm, notamment selon l'axe de leur plus grande dimension.

La silice précipitée telle que définie précédemment peut être préparée par exemple par une réaction de précipitation d'un silicate, en particulier d'un silicate de métal alcalin (tel que le silicate de sodium), avec un agent acidifiant (tel que l'acide sulfurique). Une suspension de silice précipitée est ainsi obtenue, puis la silice précipitée obtenue est séparée, en particulier par filtration, avec la production d'un gâteau de filtration, ce gâteau étant généralement ensuite soumis à une étape de délitage, cette étape comprenant l'addition d'un composé de l'aluminium (en particulier de l'aluminate de sodium). Puis il y a ensuite une étape de séchage, généralement par atomisation. Le procédé de préparation de la silice précipitée peut être un procédé quelconque, tel que l'ajout d'un agent acidifiant dans un mélange réactionnel de silicate ou l'ajout simultané total ou partiel de l'agent acidifiant et du silicate dans un mélange réactionnel comprenant de l'eau et un silicate. Le titane est introduit au cours de la préparation de la silice précipitée, selon toute méthode appropriée.

La silice précipitée utilisée dans l'invention peut être éventuellement préparée par exemple par application de procédés du type de ceux décrits dans les brevets EP0493263, US7070749.

La silice précipitée utilisée dans l'invention peut être préparée par exemple par application des procédés décrits dans les brevets EP0670813, EP0670814 ou, de préférence, EP0520862, où une étape d'introduction du titane est ajoutée.

En particulier dans le cadre du procédé décrit dans le brevet EP0520862, on peut ainsi ajouter le titane, notamment par introduction d'une solution d'oxysulfate de titane (TiOSO₄), dans l'étape de délitage, généralement tout en corrigeant le pH par addition d'un agent basique (soude par exemple) ; on peut également ajouter le titane, notamment par introduction d'une solution d'oxysulfate de titane (TiOSO₄) dilué, lors de la précipitation de la silice, pendant l'addition simultanée, notamment à pH d'au moins 8, de l'agent acidifiant et du silicate ; on peut aussi ajouter le titane, notamment par introduction d'une solution d'oxysulfate de titane (de préférence simultanément avec un agent basique), dans une bouillie de silice obtenue par délitage du gâteau de filtration, un agent basique étant de préférence ensuite ajouté (par exemple de manière à atteindre un pH d'au moins 8), la bouillie de silice finalement obtenue étant alors soumise à une filtration, le gâteau de filtration obtenu étant ensuite soumis à une étape de délitage, puis une étape de séchage a lieu.

On peut éventuellement imprégner une silice précipitée avec une solution d'oxysulfate de titane (TiOSO₄), mais ce n'est pas la voie préférée.

La silice précipitée contenant du titane et le composé diène conjugué de formule (I) peuvent être mélangés ensemble avant leur utilisation dans la composition d'élastomère(s). Selon un premier mode de réalisation, le composé diène conjugué de formule (I) n'est pas greffé sur ladite silice précipitée. Selon un second mode de réalisation, le composé diène conjugué de formule (I) est greffé sur ladite silice précipitée ; celle-ci peut ainsi se retrouver « précouplée » avant son mélange avec la composition d'élastomère(s).

Ils peuvent être introduits séparément dans la composition d'élastomère(s).

Les compositions d'élastomère(s) dans lesquelles le composé diène conjugué de formule (I) et la silice précipitée contenant du titane sont utilisés peuvent contenir au moins un agent de recouvrement de cette silice précipitée.

Par ailleurs, les compositions d'élastomère(s) dans lesquelles le composé diène conjugué de formule (I) et la silice précipitée contenant du titane sont utilisés peuvent éventuellement comprendre au moins un autre agent de couplage charge inorganique - élastomère, en particulier un silane sulfuré ou polysulfuré, tel que par exemple :
- le disulfure de bis-triéthoxysilylpropyle (TESPD)
- le tétrasulfure de bis-triéthoxysilylpropyle (TESPT)
- le tétrasulfure de bis-monohydroxydiméthylsilylpropyle
- le disulfure de bis-monoéthoxydiméthylsilylpropyle (MESPD)
- le tétrasulfure de bis-monoéthoxydiméthylsilylpropyle (MESPT)
- le tétrasulfure de bis-monoéthoxydiméthylsilylisopropyle (MESiPrT).

Cependant, de manière préférée, lesdites compositions d'élastomère(s) ne contiennent pas d'agent de couplage charge inorganique - élastomère en plus du composé diène conjugué de formule (I).

Avantageusement, la composition d'élastomère(s) employée dans la présente invention comprend au moins un élastomère isoprènique, de préférence du caoutchouc naturel.

Selon un mode de réalisation, une telle composition d'élastomère(s) peut de préférence ne pas comprendre d'autres élastomères que le ou les élastomères isoprèniques.

Selon un autre mode de réalisation, une telle composition d'élastomère(s) peut comprendre, en plus du ou des élastomères isoprèniques, au moins un élastomère autre que le ou les élastomères isopréniques. En particulier, la composition d'élastomère(s) peut comprendre au moins un élastomère isoprènique (caoutchouc naturel par exemple) et au moins un élastomère diénique autre qu'isoprénique, la quantité d'élastomère(s) isoprénique(s) par rapport à la quantité totale d'élastomère(s) étant alors, de préférence, supérieure à 50 % (en général inférieure à 99,5 % et par exemple comprise entre 70 et 99 %) en poids.

Les élastomères isopréniques qui peuvent être utilisés dans les compositions d'élastomère(s) selon l'invention sont plus spécifiquement choisis parmi :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
   (2.1) les monomères diènes conjugués, autres que l'isoprène, ayant de 4 à 22 atomes de carbone, tels que par exemple le butadiène-1,3, le diméthyl-2,3 butadiène-1,3, le chloro-2 butadiène-1,3 (ou chloroprène), le phényl-1 butadiène-1,3, le pentadiène-1,3, le hexadiène-2,4 ;
   (2.2) les monomères vinyles aromatiques ayant de 8 à 20 atomes de carbone, tels que par exemple le styrène, l'ortho-, le méta- ou le para-méthylstyrène, le mélange commercial « viny-Itoluène », le paratertiobutylstyrène, les méthoxystyrènes, les chlorostyrènes, le vinylmésitylène, le divinylbenzène, le vinylnaphtalène ;
   (2.3) les monomères nitriles vinyliques ayant de 3 à 12 atomes de carbone, tels que par exemple l'acrylonitrile, le méthacrylonitrile ;
   (2.4) les monomères esters acryliques dérivés de l'acide acrylique ou de l'acide méthacrylique avec des alcanols ayant de 1 à 12 atomes de carbone, tels que par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle ou le méthacrylate d'isobutyle ;
   (2.5) un mélange d'au moins deux des monomères précités (2.1) à (2.4) ; les polyisoprènes copolymères contenant entre 20 et 99 % en poids d'unités isopréniques et entre 80 et 1 % en poids d'unités diéniquese, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc de butyle), ainsi que les versions halogénées, en particulier chlorées ou bromées, de ces copolymères ;
(5) un mélange d'au moins deux des élastomères précités (1) à (4) ;
(6) un mélange contenant plus de 50 % (de préférence moins de 99,5 % et par exemple de 70 à 99 %) en poids d'élastomère précité (1) ou (3) et moins de 50 % (de préférence plus de 0,5 %, et par exemple entre 1 et 30 %) en poids d'un ou plusieurs élastomères diéniques autres qu'isopréniques.

Par élastomère diénique autre qu'isoprénique, on entend de manière connue en soi notamment : les homopolymères obtenus par polymérisation d'un des monomères diènes conjugués définis ci-dessus au point (2.1), comme par exemple le polybutadiène et le polychloroprène ; les copolymères obtenus par copolymérisation d'au moins deux des diènes conjugués précités (2.1) les uns avec les autres ou par copolymérisation d'un ou de plusieurs des diènes conjugués précités (2.1) avec un ou plusieurs monomères insaturés précités (2.2), (2.3) et/ou (2.4), comme par exemple le poly(butadiène-styrène) et le poly(butadiène-acrylonitrile) ; les copolymères ternaires obtenus par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène ou de propylène avec un monomère diène non conjugué du type précité tel que notamment l'hexadiène-1,4, l'éthylidène-norbornène, le dicyclopentadiène (élastomère EPDM).

A titre préférentiel, la composition d'élastomère(s) comprend un ou plusieurs élastomères isopréniques choisis parmi :
(1) les polyisoprènes de synthèse homopolymères ;
(2) les polyisoprènes de synthèse copolymères consistant en le poly(isoprène-butadiène), le poly(isoprène-styrène) et le poly(isoprène-butadiène-styrène) ;
(3) le caoutchouc naturel ;
(4) le caoutchouc butyle ;
(5) un mélange d'au moins deux des élastomères précités (1) à (4) ;
(6) un mélange contenant plus de 50 % (de préférence moins de 99,5 % et par exemple de 70 à 99 %) en poids d'élastomère précité (1) ou (3) et moins de 50 % (de préférence plus de 0,5 %, et par exemple entre 1 et 30 %) en poids d'un élastomère diénique autre qu'isoprénique consistant dans le polybutadiène, le polychloroprène, le poly(butadiène-styrène), le poly(butadiène-acrylonitrile) et un terpolymère (monomère éthylène-propylène-diène non conjugué).

A titre plus préférentiel, la composition d'élastomère(s) comprend un ou plusieurs élastomères isopréniques choisis parmi : (1) les polyisoprènes de synthèse homopolymères ; (3) le caoutchouc naturel ; (5) un mélange des élastomères précités (1) et (3) ; (6) un mélange contenant plus de 50 % (de préférence moins de 99,5 %, et par exemple de 70 à 99 %) en poids d'élastomère précité (1) ou (3) et moins de 50 % (de préférence plus de 0,5 %, et par exemple entre 1 et 30 %) en poids d'élastomère diénique autre qu'isoprénique consistant dans le polybutadiène et le poly(butadiène-acrylonitrile).

Selon une variante très préférée de l'invention, la composition d'élastomère(s) comprend à titre d'élastomère isoprénique au moins du caoutchouc naturel, voire uniquement du caoutchouc naturel.

Selon une autre variante très préférée de l'invention, la composition d'élastomère(s) comprend à titre d'élastomère(s) uniquement un caoutchouc naturel.

En général, la composition d'élastomère(s) mise en oeuvre selon l'invention peut comprendre en outre tout ou partie des autres constituants et additifs auxiliaires habituellement employés dans le domaine des compositions élastomériques.

Ainsi, la totalité ou une partie des autres constituants et additifs suivants peut être utilisée : les agents de vulcanisation (par exemple le soufre et un composé donneur de soufre (tel qu'un dérivé de thiurame)) ; les accélérateurs de vulcanisation (par exemple un dérivé de guanidine ou un dérivé de thiazoles) ; les activateurs de vulcanisation (par exemple l'acide stéarique, le stéarate de zinc et l'oxyde de zinc, qui peut éventuellement être introduit de manière fractionnée au cours de la préparation de la composition) ; le noir de carbone ; les agents protecteurs (notamment les agents antioxydants et/ou les agents antiozonants, tels que par exemple la N-phényl-1-N'-(diméthyl-1,3 butyl)-p-phénylène-diamine) ; les agents antireversions (tels que par exemple l'hexaméthylène-1,6-bis(thiosulfate), le 1,3-bis(citraconimidométhyl)benzène ; et les plastifiants.

La composition d'élastomère(s) obtenue selon l'utilisation conforme à l'invention contient une quantité efficace du composé diène conjugué de formule (I).

Plus particulièrement, les compositions d'élastomères issues de l'invention peuvent comprendre (parties en poids), pour 100 parties d'élastomère(s) :
10 à 200 parties, en particulier 20 à 150 parties, notamment 30 à 110 parties, par exemple 30 à 75 parties, de silice précipitée contenant du titane ;
1 à 20 parties, en particulier 2 à 20 parties, notamment 2 à 12 parties, par exemple 2 à 10 parties, du composé diène conjugué de formule (I).

De préférence, la quantité utilisée du composé diène conjugué de formule (I), choisie notamment dans les plages précitées, est déterminée de manière à ce qu'elle représente en général 1 à 20 %, en particulier 2 à 15 %, par exemple 4 à 12 %, en poids par rapport à la quantité utilisée de silice précipitée contenant du titane.

Les compositions d'élastomère(s) réalisées selon l'invention, et qui sont également un des objets de l'invention, peuvent être préparées selon tout mode opératoire classique, notamment en deux phases. Une première phase (dite « non productive ») est une phase de travail thermomécanique à température élevée. Elle est suivie d'une seconde phase de travail mécanique (dite « productive ») à des températures généralement inférieures à 110 °C, dans laquelle on introduit le système de vulcanisation.

Les compositions d'élastomère(s) selon l'invention peuvent être utilisées pour les semelles de chaussures, les revêtements de sol, les barrières aux gaz, les matériaux ignifugeants, les galets de téléphériques, les joints d'appareils électroménagers, les joints de conduites de liquides ou de gaz, les joints de systèmes de freinage, les tuyaux (flexibles), les gaines (notamment les gaines de câbles), les câbles, les supports de moteurs, les séparateurs de batterie, les bandes de convoyeurs, les courroies de transmission, ou, de préférence les pneumatiques (notamment les bandes de roulement de pneumatiques), et avantageusement (notamment lorsque les compositions d'élastomère(s) contiennent au moins un élastomère isoprénique) les pneumatiques pour les véhicules poids lourds, tels que les camions.

La présente invention concerne également des articles, des produits finis (transformés) ou semi-finis (semi-transformés), notamment des articles élastomériques façonnés ou moulés, comprenant au moins une composition d'élastomère(s) selon l'invention (notamment lorsqu'elle contient au moins un élastomère isoprénique, par exemple le caoutchouc naturel), et notamment les articles susmentionnés.

La présente invention concerne également l'utilisation telle que définie précédemment, dans laquelle la composition d'élastomère(s) est destinée aux pneumatiques (par exemple les bandes de roulement de pneumatiques), notamment les pneumatiques pour les véhicules poids lourds (tels que les camions), notamment lorsque cette composition contient au moins un élastomère isoprénique, par exemple le caoutchouc naturel.

Les exemples suivants illustrent l'invention sans toutefois en limiter la portée.

### EXEMPLES

### Exemple 1

66 g d'H₃PO₂ (50 % dans de l'eau), 49 g d'oxyde mésitylique et 100 ml de toluène sont ajoutés dans un flacon de 500 ml. Le mélange est porté à reflux pendant 24 heures sous azote. La RMN ³¹P montre que 82,6 % de l'H₃PO₂ a réagi et que l'acide 4-méthyl-2,4-pentadiène-2-phosphinique (PiDM) est obtenu avec une sélectivité de 68,5 %, accompagné d'autres impuretés mineures, après 6 heures de distillation azéotropique de l'eau. La réaction est poursuivie pendant 24 heures pour obtenir une conversion de 97,3 % de l'H₃PO₂ et une sélectivité de 44,4 % pour l'acide 4-méthyl-2,4-pentadiène-2-phosphinique (PiDM). Le mélange réactionnel est refroidi à température ambiante et le solvant résiduel est éliminé sur un évaporateur rotatif. Le résidu est dissous dans 200 ml de dichlorométhane et la solution est lavée à trois reprises avec 100 ml d'eau. La phase dichlorométhane combinée est séchée avec du Na₂SO₄ anhydre et le solvant est évaporé pour obtenir 46,5 g d'une huile visqueuse jaune en un rendement brut de 63,7 % et une pureté de 71 % de PiDM.

### Exemple 2

Un flacon tricol rond de 1 L, protégé sous azote, est chargé avec 107,8 g d'oxyde mésitylique, 132 g d'H₃PO₂ (50 %) et 400 ml de toluène. Le système est rincé avec de l'azote et porté à reflux. De l'eau est distillée sous la forme d'un mélange azéotropique avec du toluène. La réaction est poursuivie pendant 20 heures jusqu'à ce que la RMN ³¹P montre que tout l'H₃PO₂ a été consommé. Le mélange réactionnel est refroidi à température ambiante et lavé avec 400 ml d'eau, puis extrait avec une solution de NaOH diluée. La phase aqueuse est ensuite acidifiée avec HCl 4 N à pH 1, puis de nouveau extraite avec 50 ml de dichlorométhane. La phase organique est recueillie, séchée sur du Na₂SO₄ anhydre et évaporée pour obtenir 68,5 g d'une huile jaune vif. La RMN ³¹P montre que 89,7 % en moles correspond à du PiDM en un rendement brut de 46,9 %.

### Exemple 3

Un polymère est obtenu par polymérisation de PiDM purifié de l'Exemple 2 à température ambiante. Le polymère est isolé par précipitation à partir de toluène. 40 g de PiDM sont dissous dans 100 ml de toluène. 0,1 g d'AIBN (azobisisobutyronitrile) est chargé en 3 portions sous atmosphère d'azote à 80 °C en 3 heures. Après agitation pendant 1 heure supplémentaire à la même température, le précipité est ensuite filtré et séché pour obtenir 30 g d'un polymère solide jaune pâle. Le polymère peut être durci dans une solution de NaOH à 10 % pendant 2 jours, puis transformé en un gel gonflé à l'eau.

### Exemple 4

De l'acide phosphoreux, 10 g, séché pendant 4 heures à 50 °C sous vide et 14,2 g d'oxyde mésitylique d'isomères mixtes sont mélangés dans un flacon à 28 °C. Le mélange devient noir et la RMN ³¹P montre que 90 % de l'acide phosphoreux a réagi. 24,7 g d'anhydride acétique sont ensuite ajoutés lentement sous mélange en 45 min, la température étant maintenue à environ 28 °C. Le mélange est porté à 48 °C pendant 4 heures. Une conversion de l'H₃PO₃ de 98 % est observée avec une sélectivité de 86 % pour PoDM et ses dérivés anhydride.

### Exemple 5

De l'H₃PO₃ est séché pendant environ 4 h à 50 °C sous vide. 10 g d'H₃PO₃ sec et 12,43 g d'oxyde mésitylique sont mélangés dans un flacon à 28-30 °C. 24,7 g d'anhydride acétique sont ensuite ajoutés lentement sous mélange en 50 min, la température de réaction étant maintenue inférieure à 30 °C. Le mélange est maintenu sous agitation à cette température pendant 4 h. La RMN ³¹P montre une conversion de 81,2 % de l'H₃PO₃ et une sélectivité de 86 % pour le PoDM et ses dérivés anhydride.

### Exemple 6

10 g de monomère PoDM de l'Exemple 5 sont ajoutés dans un flacon monocol à fond rond de 100 ml. Le monomère est porté à 100 °C et vieilli pendant 5 h. Une fois l'étape de vieillissement achevée, le flacon est refroidi à température ambiante. L'analyse par RMN ¹H révèle que 87 % du PoDM a été transformé en une forme oligomère.

### Exemple 7

On utilise un gâteau de filtration de silice Z1165MP, issu d'une étape de filtration et ayant un extrait sec de 24 % en poids. On fait subir à ce gâteau une opération de délitage avec de l'eau pour former une bouillie (slurry) de silice présentant un extrait sec de 10 % en poids.

On introduit 10 kg de cette bouillie dans un réacteur chauffé ensuite à 60 °C en 40 minutes.

On ajoute ensuite 143 grammes d'une solution d'hydroxyde de sodium (ayant une concentration de 1 mol NaOH / kg) à un débit de 25 g / min, ce qui permet d'atteindre un pH de 8.

Toujours à 60 °C, on ajoute ensuite 1074 grammes d'une solution d'oxysulfate de titane (ayant une concentration de 0,7 mol Ti / kg et préparé à partir d'une solution d'oxysulfate de titane à 15 % (commercialisé par la société Simon Aldrich)) pendant 45 minutes, à un pH régulé de 8 par ajout de la solution de NaOH.

La bouillie de silice alors obtenue est ensuite filtrée et lavée avec 4 fois 5 litres d'eau sur un filtre plan.

On fait subir au gâteau issue de cette filtration une opération de délitage avec de l'eau pour former une bouillie (slurry) de silice présentant un extrait sec de 10 % en poids.

Le gâteau délité est ensuite séché au moyen d'un atomiseur à buse en pulvérisant le gâteau délité au travers d'une buse avec une pression d'air de 1 bar (température d'entrée moyenne : 350 °C ; température de sortie moyenne : 100 °C).

Les caractéristiques de la silice précipitée obtenue sont alors les suivantes :

| | |
|---|---|
| Surface CTAB (m²/g) | 157 |
| Surface BET (m²/g) | 196 |
| Teneur en titane (Ti) (%) | 3,7 |

On n'observe pas par DRX de TiO₂ cristallisé

### Exemple 8

On utilise un gâteau de filtration de silice Z1165MP, issu d'une étape de filtration et ayant un extrait sec de 24 % en poids. On fait subir à ce gâteau une opération de délitage avec de l'eau pour former une bouillie (slurry) de silice présentant un extrait sec de 10 % en poids.

On introduit 10 kg de cette bouillie dans un réacteur chauffé ensuite à 60 °C en 40 minutes.

On ajoute ensuite 143 grammes d'une solution d'hydroxyde de sodium (ayant une concentration de 1 mol NaOH / kg) à un débit de 25 g / min, ce qui permet d'atteindre un pH de 8.

Toujours à 60 °C, on ajoute ensuite 358 grammes d'une solution d'oxysulfate de titane (ayant une concentration de 0,7 mol Ti / kg et préparé à partir d'une solution d'oxysulfate de titane à 15 % (commercialisé par la société Simon Aldrich)) pendant 15 minutes, à un pH régulé de 8 par ajout de la solution de NaOH.

La bouillie de silice alors obtenue est ensuite filtrée et lavée avec 4 fois 5 litres d'eau sur un filtre plan.

On fait subir au gâteau issue de cette filtration une opération de délitage avec de l'eau pour former une bouillie (slurry) de silice présentant un extrait sec de 10 % en poids.

Le gâteau délité est ensuite séché au moyen d'un atomiseur à buse en pulvérisant le gâteau délité au travers d'une buse avec une pression d'air de 1 bar (température d'entrée moyenne : 350 °C ; température de sortie moyenne : 100 °C).

Les caractéristiques de la silice précipitée obtenue sont alors les suivantes :

| | |
|---|---|
| Surface CTAB (m²/g) | 155 |
| Surface BET (m²/g) | 196 |
| Teneur en titane (Ti) (%) | 1,1 |

On n'observe pas par DRX de TiO₂ cristallisé

Les composés tels que préparés dans les exemples 1 à 6 précédents peuvent être utilisés en tant qu'agent de couplage entre une silice précipitée contenant du titane telle que préparée dans les exemples 7 et 8 précédents, et un élastomère, tel qu'un caoutchouc naturel, par exemple.

### Exemple 9

Dans un mélangeur interne de type Brabender (70 ml), on prépare les compositions élastomériques dont la constitution, exprimée en partie en poids pour 100 parties d'élastomères (pce), est indiquée dans le tableau I ci-dessous :

**Tableau I**

| Compositions | Témoin | Composition 1 | Composition 2 |
|---|---|---|---|
| NR (1) | 100 | 100 | 100 |
| Silice 1 (2) | 50 | | |
| Silice S1 (3) | | 50 | |
| Silice S2 (4) | | | 50 |
| Agent de couplage (5) | 4,0 | 4,0 | 4,0 |
| ZnO | 2 | 2 | 2 |
| Acide stéarique | 2,5 | 2,5 | 2,5 |
| Antioxydant 1 (6) | 1,5 | 1,5 | 1,5 |
| Antioxydant 2 (7) | 1,0 | 1,0 | 1,0 |
| Noir de carbone (N330) | 3,0 | 3,0 | 3,0 |
| CBS (8) | 1,5 | 1,5 | 1,5 |
| PVI (9) | 0,2 | 0,2 | 0,2 |
| Soufre | 2,0 | 2,5 | 2,5 |

| | | | |
|---|---|---|---|
| (1) Caoutchouc naturel SMR 5 - CV60 (fourni par la société Safic-Alcan) (2) Silice Z1165MP de la société Rhodia (3) Silice S1 selon la présente invention (1,1 % Ti - exemple 8 ci-dessus) (4) Silice S2 selon la présente invention (3,7 % Ti - exemple 7 ci-dessus) (5) Acide 4-méthyl-2,4-pentadiène-2-phosphinique (PiDM). (6) N-1,3-diméthylbutyl-N-phényl-para-phénylènediamine (Santoflex 6-PPD de la société Flexsys) (7) 2,2,4-trimethyl-1H-quinoline (Permanax TQ de la société Flexsys) (8) N-cyclohexyl-2-benzothiazyl-sulfénamide (Rhénogran CBS-80 de la société RheinChemie) (9) N-(cyclohexylthio)phtalimide (Santograd PVI de la société Flexsys) Procédé de préparation des compositions de caoutchouc : | | | |

Le procédé de préparation des compositions de caoutchouc est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque Brabender (capacité de 70 ml). Le coefficient de remplissage est de 0,75. La température initiale et la vitesse des rotors sont fixées à chaque fois de manière à atteindre des températures de tombée de mélange voisines de 150-170°C.

Décomposée ici en deux passes, la première phase permet d'incorporer dans une première passe, les élastomères puis la charge renforçante (introduction fractionnée) avec l'agent de couplage et l'acide stéarique. Pour cette passe, la durée est comprise entre 4 et 10 minutes.

Après refroidissement du mélange (température inférieure à 100°C), une seconde passe permet d'incorporer l'oxyde de zinc et les agents protecteurs/antioxydants (6-PPD notamment). La durée de cette passe est comprise entre 2 et 5 minutes.

Après refroidissement du mélange (température inférieure à 100°C), la seconde phase permet l'introduction du système de vulcanisation (soufre et accélérateurs, comme le CBS). Elle est réalisée sur un mélangeur à cylindres, préchauffé à 50°C. La durée de cette phase est comprise entre 2 et 6 minutes.

Chaque mélange final est ensuite calandré sous la forme de plaques d'épaisseur 2-3 mm.

Sur ces mélanges dits crus, une évaluation de leurs propriétés rhéologiques permet d'optimiser la durée et la température de vulcanisation.

Ensuite, les propriétés mécaniques et dynamiques des mélanges vulcanisés à l'optimum de cuisson (T98) sont mesurées.

### Propriétés rhéologiques

### - Rhéométrie des compositions :

Les mesures sont réalisées sur les compositions à l'état cru. On a porté dans le tableau ii les résultats concernant le test de rhéologie qui est conduit à 150°C au moyen d'un rhéomètre ODR MONSANTO selon la norme NF ISO 3417.

Selon ce test, la composition à tester est placée dans la chambre d'essai régulée à la température de 150°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :
- le couple minimum (Cmin) qui reflète la viscosité de la composition à la température considérée ;
- le couple maximum (Cmax) ;
- et le temps T98 nécessaire pour obtenir un état de vulcanisation correspondant à 98 % de la vulcanisation complète (ce temps est pris comme optimum de vulcanisation).

Les résultats obtenus sont indiqués dans le tableau II.

**Tableau II**

| Compositions | Témoin | Composition 1 | Composition 2 |
|---|---|---|---|
| Cmin (dN.m) | 10,4 | 10,7 | 10,9 |
| Cmax (dN.m) | 45,6 | 62,3 | 69,2 |
| T98 (min) | 22,3 | 19,8 | 17,9 |

On constate que les compositions issues de l'invention (Compositions 1 et 2) présentent un ensemble satisfaisant de propriétés rhéologiques.

L'utilisation des silices S1 et S2 dans la présente invention (Compositions 1 et 2) permet d'atteindre une valeur de couple maximum plus élevée sans pénaliser le comportement en vulcanisation et avec une durée optimale inférieure (T98) par rapport au mélange témoin.

### Propriétés mécaniques des vulcanisats :

Les mesures sont réalisées sur les compositions vulcanisées à l'optimum (T98) pour une température de 150°C.

Les essais de traction uniaxiale sont réalisés conformément aux indications de la norme NF ISO 37 avec des éprouvettes de type H2 à une vitesse de 500 mm/min sur un appareil INSTRON 5564. Les modules x %, correspondant à la contrainte mesurée à x % de déformation en traction, et la résistance à la rupture sont exprimés en MPa ; l'allongement à la rupture est exprimé en %. Il est possible de déterminer un indice de renforcement (I.R.) qui est égal au rapport entre le module à 300 % de déformation et le module à 100% de déformation.

La mesure de dureté Shore A des vulcanisats est réalisée selon les indications de la norme ASTM D 2240. La valeur donnée est mesurée à 15 secondes.

Les propriétés mesurées sont rassemblées dans le tableau III.

**Tableau III**

| Compositions | Témoin | Composition 1 | Composition 2 |
|---|---|---|---|
| Module 10 % (MPa) | 0,7 | 0,68 | 0,63 |
| Module 100 % (MPa) | 1,3 | 1,8 | 1,7 |
| Module 300 % (MPa) | 4,2 | 6,2 | 6,3 |
| Résistance rupture (MPa) | 16,9 | 22,0 | 26,1 |
| Allongement à la rupture (%) | 608 | 606 | 642 |
| I.R. | 3,10 | 3,53 | 3,69 |
| Dureté Shore A-15s (pts) | 46 | 51 | 52 |

On constate que les compositions issues de l'invention (Compositions 1 et 2) présentent un bon compromis de propriétés mécaniques par rapport à ce qui est obtenu avec le mélange témoin.

Les compositions 1 et 2 présentent ainsi des modules 10 % et 100 % relativement faibles et un module 300 % élevé, d'où un indice de renforcement supérieur.

L'utilisation des silices S1 et S2 de la présente invention (Compositions 1 et 2) permet d'améliorer le niveau de renforcement en atteignant un module 300 %, une résistance et un allongement à la rupture plus élevés par rapport au mélange témoin.

On constate également que l'augmentation de la teneur en titane dans la silice (Composition 2 par rapport à la Composition 1) permet d'accroitre la résistance et l'allongement à la rupture.

### Propriétés dynamiques des vulcanisats :

Les propriétés dynamiques sont mesurées sur un viscoanalyseur (Metravib VA3000), selon la norme ASTM D5992.

Les valeurs de facteur de perte (tan δ) et de module complexe en compression dynamique (E*) sont enregistrées sur des échantillons vulcanisés (éprouvette cylindrique de section 95 mm² et de hauteur 14 mm). L'échantillon est soumis au départ à une prédéformation de 10% puis à une déformation sinusoïdale en compression alternée de plus ou moins 4%. Les mesures sont réalisées à 60°C et à une fréquence de 10 Hz.

Les résultats, présentés dans le tableau IV, sont le module complexe en compression (E* - 60°C - 10 Hz) et le facteur de perte (tan δ - 60°C - 10 Hz).

**Tableau IV**

| Compositions | Témoin | Composition 1 | Composition 2 |
|---|---|---|---|
| E* - 60°C - 10 Hz (MPa) | 5,28 | 5,08 | 5,66 |
| Tan δ - 60°C - 10 Hz | 0,185 | 0,127 | 0,152 |

L'utilisation des silices S1 et S2 de la présente invention (Compositions 1 et 2) permet une réduction conséquente du comportement d'hystérésis avec des valeurs bien plus faibles du facteur de perte (tan δ - 60°C) par rapport au mélange témoin, tout en ayant une rigidité dynamique satisfaisante.

L'examen des différents tableaux II à IV montre que les compositions conformes à l'invention (Compositions 1 et 2), c'est-à-dire l'utilisation conjointe d'une silice particulière et d'un agent de couplage spécifique, permettent d'accroître le renforcement mécanique et les propriétés hystérétiques à 60°C par rapport au mélange témoin.

Une conséquence de l'utilisation conjointe d'une silice précipitée contenant du titane et d'un agent de couplage particulier telle que revendiquée est d'aboutir à une amélioration du compromis entre résistance à l'usure et la résistance au roulement lorsque la composition d'élastomère(s) est utilisée pour l'application pneumatique (par exemple : pour voitures, camionnettes, camions, poids lourds,...) et pour différentes parties du pneu (telles que : bande de roulement, sous-bande de roulement, ceinture, flanc, talon, carcasse, enveloppe, calandrage intérieur...).

## Revendications

1. Utilisation, dans une composition d'élastomère(s) :
- d'une silice précipitée contenant entre 0,5 et 10% en poids de titane, comme charge inorganique, avec
- un composé ayant la formule (I) suivante, ledit composé de formule (I) étant éventuellement, en totalité ou en partie, sous une forme polymérisée : 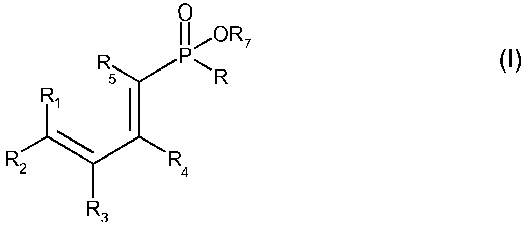 dans laquelle :
R représente R₆ ou OR₈,
R₁, R₂, R₃, R₄, R₅ et R₆ sont chacun choisis indépendamment parmi les groupes hydrogène, alkyle, aryle, alkaryle, aralkyle, cycloalkyle, hétérocycloalkyle et alcényle, et
R₇ et R₈ sont chacun choisis indépendamment parmi les groupes hydrogène, alkyle, aryle, alkaryle, aralkyle, cycloalkyle, alcényle, et les métaux compris dans le groupe constitué par Na, Li et Ca.

2. Utilisation selon la revendication 1, dans laquelle le composé de formule (I), qui est éventuellement, en totalité ou en partie, sous une forme polymérisée, est utilisé en tant qu'agent de couplage entre ladite silice précipitée et le(s)dit(s) élastomère(s).

3. Utilisation selon l'une des revendications 1 et 2, dans laquelle la totalité ou une partie du composé de formule (I) est sous la forme d'un polymère ayant un indice de polymérisation inférieur à 20, de préférence inférieur à 10.

4. Utilisation selon l'une des revendications 1 à 3, dans laquelle R représente R₆, de préférence R₆ étant H.

5. Utilisation selon l'une des revendications 1 à 3, dans laquelle R représente OR₈, de préférence R₈ étant H.

6. Utilisation selon l'une des revendications 1 à 4, dans laquelle le composé de formule (I) est l'acide 4-méthyl-2,4-pentadiène-2-phosphinique.

7. Utilisation selon l'une des revendications 1 à 6, dans laquelle la teneur en titane de ladite silice précipitée est d'au moins 0,75 % en poids.

8. Utilisation selon l'une des revendications 1 à 7, **caractérisée en ce que** ledit composé de formule (I) et ladite silice précipitée sont préalablement mélangés entre eux, de préférence ledit composé de formule (I) étant préalablement greffé sur ladite silice précipitée.

9. Utilisation selon l'une des revendications 1 à 8, dans laquelle ladite composition d'élastomère(s) comprend au moins un élastomère isoprénique, de préférence du caoutchouc naturel.

10. Utilisation selon l'une des revendications 1 à 8, dans laquelle ladite composition d'élastomère(s) comprend au moins un élastomère isoprénique et au moins un élastomère diénique autre qu'isoprénique, la quantité d'élastomère(s) isoprénique(s) par rapport à la quantité totale d'élastomère(s) étant de préférence supérieure à 50 % en poids.

11. Composition d'élastomère(s) comprenant :
- au moins un élastomère,
- au moins une silice précipitée contenant entre 0,5 et 10% en poids de titane, comme charge inorganique,
- au moins un agent de couplage charge inorganique - élastomère, de formule (I): 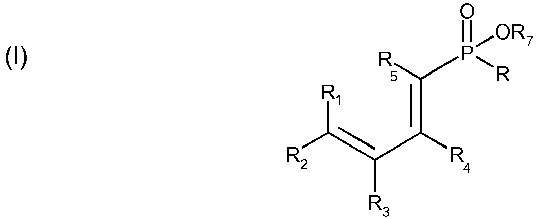 dans laquelle :
R représente R₆ ou OR₈,
R₁, R₂, R₃, R₄, R₅ et R₆ sont chacun choisis indépendamment parmi les groupes hydrogène, alkyle, aryle, alkaryle, aralkyle, cycloalkyle, hétérocycloalkyle et alcényle, et
R₇ et R₈ sont chacun choisis indépendamment parmi les groupes hydrogène, alkyle, aryle, alkaryle, aralkyle, cycloalkyle, alcényle, et les métaux compris dans le groupe constitué par Na, Li et Ca, ledit composé de formule (I) étant éventuellement, en totalité ou en partie, sous une forme polymérisée.

12. Composition selon la revendication 11, **caractérisée en ce que** ledit composé de formule (I) et ladite silice précipitée sont préalablement mélangés entre eux.

13. Composition selon l'une des revendications 11 et 12, **caractérisée en ce que** ladite composition comprend au moins un élastomère isoprénique, de préférence du caoutchouc naturel.

14. Composition selon l'une des revendications 11 à 13, **caractérisée en ce que** ladite composition d'élastomère(s) comprend au moins un élastomère isoprénique et au moins un élastomère diénique autre qu'isoprénique, la quantité d'élastomère(s) isoprénique(s) par rapport à la quantité totale d'élastomère(s) étant de préférence supérieure à 50 % en poids.

15. Article comprenant au moins une composition selon l'une des revendications 11 à 14, cet article consistant en une semelle de chaussures, un revêtement de sols, une barrière aux gaz, un matériau ignifugeant, un galet de téléphérique, un joint d'appareil électroménager, un joint de conduite de liquides ou de gaz, un joint de système de freinage, un tuyau, une gaine, un câble, un support de moteur, un séparateur de batterie, une bande de convoyeur, une courroie de transmissions ou, de préférence, un pneumatique.

16. Pneumatique selon la revendication 15 pour les véhicules poids lourds, en particulier pour les camions.

## Patentansprüche

1. Verwendung
- einer Fällungskieselsäure, die zwischen 0,5 und 10 Gew.-% Titan enthält, als anorganischen Füllstoff mit
- einer Verbindung der folgenden Formel (I), wobei die Verbindung der Formel (I) gegebenenfalls ganz oder teilweise in polymerisierter Form vorliegt: 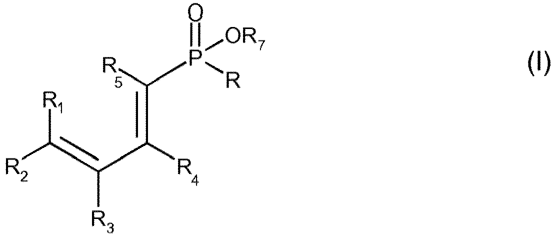 wobei:
R für R₆ oder OR₈ steht,
R₁, R₂, R₃, R₄, R₅ und R₆ jeweils unabhängig aus Wasserstoff-, Alkyl-, Aryl-, Alkaryl-, Aralkyl-, Cycloalkyl-, Heterocycloalkyl- und Alkenylgruppen ausgewählt sind und
R₇ und R₈ jeweils unabhängig aus Wasserstoff-, Alkyl-, Aryl-, Alkaryl-, Aralkyl-, Cycloalkyl-, und Alkenylgruppen und Metallen aus der Gruppe bestehend aus Na, Li und Ca ausgewählt sind,
in einer Elastomerzusammensetzung.

2. Verwendung nach Anspruch 1, wobei die Verbindung der Formel (I), die gegebenenfalls ganz oder teilweise in polymerisierter Form vorliegt, als Kupplungsmittel zwischen der Fällungskieselsäure und dem Elastomer bzw. den Elastomeren verwendet wird.

3. Verwendung nach einem der Ansprüche 1 und 2, wobei die Verbindung der Formel (I) ganz oder teilweise in Form eines Polymers mit einem Polymerisationsindex von weniger als 20, vorzugsweise weniger als 10, vorliegt.

4. Verwendung nach einem der Ansprüche 1 bis 3, wobei R für R₆ steht, wobei R₆ vorzugsweise für H steht.

5. Verwendung nach einem der Ansprüche 1 bis 3, wobei R für OR₈ steht, wobei R₈ vorzugsweise für H steht.

6. Verwendung nach einem der Ansprüche 1 bis 4, wobei es sich bei der Verbindung der Formel (I) um 4-Methyl-2,4-pentadien-2-phosphinsäure handelt.

7. Verwendung nach einem der Ansprüche 1 bis 6, wobei der Titangehalt der Fällungskieselsäure mindestens 0,75 Gew.-% beträgt.

8. Verwendung nach einem der Ansprüche 1 bis 7, **dadurch gekennzeichnet, dass** die Verbindung der Formel (I) und die Fällungskieselsäure miteinander vorgemischt werden, wobei die Verbindung der Formel (I) vorzugsweise auf die Fällungskieselsäure aufgepfropft wird.

9. Verwendung nach einem der Ansprüche 1 bis 8, wobei die Elastomerzusammensetzung mindestens ein Isopren-Elastomer, vorzugsweise Naturkautschuk, umfasst.

10. Verwendung nach einem der Ansprüche 1 bis 8, wobei die Elastomerzusammensetzung mindestens ein Isoprenelastomer und mindestens ein von Isoprenelastomer verschiedenes Dienelastomer umfasst, wobei die Menge an Isoprenelastomer bzw. Isoprenelastomeren, bezogen auf die Gesamtmenge von Elastomer bzw. Elastomeren, vorzugsweise mehr als 50 Gew.-% beträgt.

11. Elastomerzusammensetzung, umfassend :
- mindestens ein Elastomer,
- mindestens eine Fällungskieselsäure, die zwischen 0,5 und 10 Gew.-% Titan enthält, als anorganischen Füllstoff,
- mindestens ein Kupplungsmittel für anorganische Füllstoffe und Elastomere der Formel (I) : 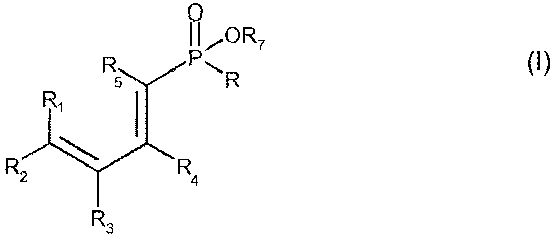 wobei:
R für R₆ oder OR₈ steht,
R₁, R₂, R₃, R₄, R₅ und R₆ jeweils unabhängig aus Wasserstoff-, Alkyl-, Aryl-, Alkaryl-, Aralkyl-, Cycloalkyl-, Heterocycloalkyl- und Alkenylgruppen ausgewählt sind und
R₇ und R₈ jeweils unabhängig aus Wasserstoff-, Alkyl-, Aryl-, Alkaryl-, Aralkyl-, Cycloalkyl-, und Alkenylgruppen und Metallen aus der Gruppe bestehend aus Na, Li und Ca ausgewählt sind, wobei die Verbindung der Formel (I) gegebenenfalls ganz oder teilweise in polymerisierter Form vorliegt.

12. Zusammensetzung nach Anspruch 11, **dadurch gekennzeichnet, dass** die Verbindung der Formel (I) und Fällungskieselsäure miteinander vorgemischt sind.

13. Zusammensetzung nach einem der Ansprüche 11 und 12, **dadurch gekennzeichnet, dass** die Zusammensetzung mindestens ein Isopren-Elastomer, vorzugsweise Naturkautschuk, umfasst.

14. Zusammensetzung nach einem der Ansprüche 11 bis 13, **dadurch gekennzeichnet, dass** die Elastomerzusammensetzung mindestens ein Isopren-elastomer und mindestens ein von Isoprenelastomer verschiedenes Dienelastomer umfasst, wobei die Menge an Isoprenelastomer bzw. Isoprenelastomeren, bezogen auf die Gesamtmenge von Elastomer bzw. Elastomeren, vorzugsweise mehr als 50 Gew.-% beträgt.

15. Artikel, umfassend mindestens eine Zusammensetzung nach einem der Ansprüche 11 bis 14, wobei dieser Artikel aus einer Schuhsohle, einem Bodenbelag, einer Gasbarriere, einem Flammschutzmaterial, einer Rolle für Seilbahnen, einer Dichtung für Haushaltselektrogeräte, einer Dichtung für Flüssigkeits- oder Gasleitungen, einer Bremssystemdichtung, einem Rohr, einer Ummantelung, einem Kabel, einer Motoraufhängung, einem Batterieseparator, einem Förderriemen, einem Treibriemen oder vorzugsweise einem Reifen besteht.

16. Reifen nach Anspruch 15 für Schwerlastfahrzeuge, insbesondere für Lastwagen.

## Claims

1. Use, in an elastomer composition :
- of a precipitated silica containing between 0.5% and 10% by weight of titanium, as mineral filler, with
- a compound having the formula (I) below, said compound of formula (I) being optionally, totally or partly, in a polymerized form : 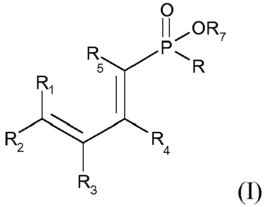 in which :
R represents R₅ or OR₈,
R₁, R₂, R₃, R₄, R₅ and R₅ are each independently chosen from hydrogen, alkyl, aryl, alkaryl, aralkyl, cycloalkyl, heterocycloalkyl and alkenyl groups, and
R₇ and R₈ are each independently chosen from hydrogen, alkyl, aryl, alkaryl, aralkyl, cycloalkyl and alkenyl groups, and metals from the group consisting of Na, Li and Ca.

2. Use according to Claim 1, in which the compound of formula (I), which is optionally, totally or partly, in a polymerized form, is used as coupling agent between said precipitated silica and said elastomer(s).

3. Use according to either of Claims 1 and 2, in which all or part of the compound of formula (I) is in the form of a polymer with a polymerization index of less than 20 and preferably less than 10.

4. Use according to one of Claims 1 to 3, in which R represents R₆, R₆ preferably being H.

5. Use according to one of Claims 1 to 3, in which R represents OR₈, R₈ preferably being H.

6. Use according to one of Claims 1 to 4, in which the compound of formula (I) is 4-methyl-2,4-pentadiene-2-phosphinic acid.

7. Use according to one of Claims 1 to 6, in which the titanium content of said precipitated silica is at least 0.75% by weight.

8. Use according to one of Claims 1 to 7, **characterized in that** said compound of formula (I) and said precipitated silica are premixed with each other, said compound of formula (I) preferably being pregrafted onto said precipitated silica.

9. Use according to one of Claims 1 to 8, in which said elastomer composition comprises at least one isoprene elastomer, preferably natural rubber.

10. Use according to one of Claims 1 to 8, in which said elastomer composition comprises at least one isoprene elastomer and at least one diene elastomer other than an isoprene elastomer, the amount of isoprene elastomer(s) relative to the total amount of elastomer(s) preferably being greater than 50% by weight.

11. Elastomer composition comprising :
- at least one elastomer,
- at least one precipitated silica containing between 0.5% and 10% by weight of titanium, as mineral filler,
- at least one mineral filler/elastomer coupling agent, of formula (I) 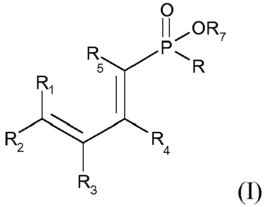 in which :
R represents R₆ or OR₈,
R₁, R₂, R₃, R₄, R₅ and R₆ are each independently chosen from hydrogen, alkyl, aryl, alkaryl, aralkyl, cycloalkyl, heterocycloalkyl and alkenyl groups, and
R₇ and R₈ are each independently chosen from hydrogen, alkyl, aryl, alkaryl, aralkyl, cycloalkyl and alkenyl groups, and metals from the group consisting of Na, Li and Ca, said compound of formula (I) being optionally, totally or partly, in a polymerized form.

12. Composition according to Claim 11, **characterized in that** said compound of formula (I) and said precipitated silica are premixed with each other.

13. Composition according to either of Claims 11 and 12, **characterized in that** said composition comprises at least one isoprene elastomer, preferably natural rubber.

14. Composition according to one of Claims 11 to 13, **characterized in that** said elastomer composition comprises at least one isoprene elastomer and at least one diene elastomer other than an isoprene elastomer, the amount of isoprene elastomer(s) relative to the total amount of elastomer(s) preferably being greater than 50% by weight.

15. Article comprising at least one composition according to one of Claims 11 to 14, this article consisting of a footwear sole, a floor covering, a gas barrier, a flame-retardant material, a roller for a cableway, a seal for a domestic electrical appliance, a seal for a liquid or gas pipe, a braking system seal, a pipe, a sheathing, a cable, an engine support, a battery separator, a conveyor belt, a transmission belt or, preferably, a tire.

16. Tire according to Claim 15 for heavy-goods vehicles, in particular for lorries.
